# DEMANDE DE BREVET EUROPEEN

(11) **EP 2 629 203 A1**
(43) Date de publication de la demande: **21.08.2013**
(21) Numéro de dépôt: 13154020.5
(22) Date de dépôt: 05.02.2013
(51) Int. Cl.: G06F 11/20, H04L 12/40

(54) **Procédé d'élection de l'équipement maître actif parmi deux équipements maîtres redondants**

(30) Priorité: 15.02.2012 FR 1251378
(71) Demandeur: Schneider Electric Industries SAS, 92500 Rueil-Malmaison (FR)
(72) Inventeur: Gomez, Gérard, 06510 Le Broc (FR); Adragna, Jean-Jacques, 06100 Nice (FR)
(74) Mandataire: Dufresne, Thierry

(57) **Abrégé**

L'invention concerne un procédé d'élection de l'équipement maître actif parmi deux équipements maîtres primaire et secondaire redondants (10, 20), lesdits équipements maîtres primaire et secondaire (10, 20) étant directement connectés à un bus de terrain (1) et reliés entre eux par un câble terminal (30), et présentant chacun un mode de fonctionnement actif et un mode de veille. Selon l'invention, chacun desdits équipements maîtres primaire et secondaire (10, 20) présente une même machine d'état (12, 22) comprenant des moyens pour désigner l'un desdits équipements maîtres primaire et secondaire (10, 20) comme équipement maître actif, et le câble terminal (30) comprend des moyens intrinsèques pour établir une relation directionnelle de l'équipement maître primaire (10, 20) à l'équipement maître secondaire (10, 20).

## Description

### Domaine technique de l'invention

La présente invention concerne le domaine des automatismes industriels, et plus particulièrement des équipements maîtres, dits "masters", c'est-à-dire des équipements aptes à gérer des grappes d'équipements ou d'instruments sur un bus de terrain - "fieldbus" en anglais.

Plus précisément, la présente invention propose une solution de gestion de la redondance de tels équipements "masters" sur un "fieldbus". Le procédé selon l'invention comprend des moyens autonomes de détermination de l'équipement maître actif, l'arbitrage étant effectué directement entre les équipements maîtres redondants, sans nécessiter la présence d'un équipement tiers indépendant. La redondance vise ici une question de disponibilité d'au moins un équipement maître sur le bus de terrain, et non une problématique de sécurité.

### Etat de la technique

De manière connue, quand deux équipements maîtres sont connectés à un même bus de terrain, à des fins de redondance, pour contrôler alternativement ledit bus de terrain, il existe trois types classiques de connexion de ces équipements maîtres. Premièrement, les échanges entre ces équipements maîtres et le processeur de la machine hôte sont gérés via une connexion dédiée. Ensuite, lesdits équipements maîtres sont reliés au bus de terrain sur lequel ils seront amenés à assurer une fonction de contrôle. Enfin, chaque équipement maître est relié à un "arbitre" commun chargé d'attribuer à chacun desdits équipements maîtres le rôle qu'il doit assumer à un instant donné.

En général, le rôle du système d'arbitrage réside essentiellement dans les fonctions suivantes :
- Spécifier un équipement maître physique comme équipement maître actif primaire, parmi deux équipements maîtres identiques ;
- Détecter la survenance de défauts, pour échanger le rôle des équipements maîtres et, par exemple, rendre actif l'équipement maître secondaire lorsque l'équipement maître primaire actif est en défaut, et réciproquement ;
- Assigner à chaque équipement maître son mode de fonctionnement, qui découle de la mise en oeuvre des deux fonctions précédentes.

Une solution basique connue consiste à mettre en oeuvre un moyen mécanique, c'est-à-dire un interrupteur, pour déterminer lequel des deux équipements maîtres redondants est actif par défaut.

Une autre solution standard fréquemment mise en oeuvre consiste à avoir un canal de communication dédié entre les deux équipements maîtres redondants : Ce canal spécifique permet de déterminer l'état et les conditions de fonctionnement de chaque équipement maître, et de détecter mutuellement les éventuels modes de défaut.

A titre d'exemple, le document US 2011/0161538 A1 illustre un arrière-plan technologique de l'invention. Il décrit la gestion de deux équipements maîtres redondants sur une même carte mère, avec un mécanisme d'auto-adressage sur le bus de terrain commun auquel ils sont connectés.

Le document US 6757777 B1 décrit un système d'arbitrage entre deux équipements maîtres redondants comprenant un "électeur" situé au niveau d'un bus de terrain normé. Ce système d'arbitrage est donc externe aux équipements maîtres ; et les deux équipements maîtres ne sont pas directement connectés au bus de terrain.

Enfin, le document US 2002/0083364 A1 décrit un procédé de gestion de deux automates redondants, relié par un lien logique, mais sans que ce procédé ne soit en mesure d'assurer l'auto-élection, par des moyens intrinsèques de ce lien, de l'automate maître actif.

Le but de l'invention est donc de proposer un système plus performant de sélection d'un équipement maître actif parmi deux équipements maîtres redondants. La présente invention concerne ainsi un mécanisme d'auto-élection de l'équipement maître actif.

### Exposé de l'invention

A cet effet, l'invention a pour objet un procédé d'élection de l'équipement maître actif parmi deux équipements maîtres primaire et secondaire redondants, lesdits équipements maîtres primaire et secondaire étant directement connectés à un bus de terrain et reliés entre eux par un câble terminal, et présentant chacun un mode de fonctionnement actif et un mode de veille avec surveillance active. Selon l'invention, chacun desdits équipements maîtres primaire et secondaire présente une même interface et une même machine d'état comprenant des moyens pour désigner l'un desdits équipements maître primaire et secondaire comme équipement maître actif, et le câble terminal comprend des moyens intrinsèques pour établir une relation directionnelle de l'équipement maître primaire à l'équipement maître secondaire.

De plus, l'équipement maître primaire et l'équipement maître secondaire comprennent chacun une entrée primaire, une sortie primaire, une entrée secondaire et une sortie secondaire et un câble terminal relie la sortie primaire de l'équipement maître primaire à l'entrée secondaire de l'équipement maître secondaire et la sortie secondaire de l'équipement maître secondaire à l'entrée primaire de l'équipement maître primaire. Lorsqu'ils démarrent, les deux équipements maîtres primaire et secondaire signalent, de façon identique, qu'ils sont aptes à fonctionner sur l'interface en émettant un signal nominal sur leurs sorties primaire et secondaire, la relation directionnelle établie par le câble terminal étant configurée de telle manière que l'équipement maître secondaire détecte la présence de l'équipement maître primaire, s'il est apte à fonctionner, sur son entrée secondaire, et l'équipement maître primaire détecte l'équipement maître secondaire, s'il est apte à fonctionner, sur son entrée primaire ; par ailleurs, pour l'équipement maître primaire ayant détecté sur son entrée primaire l'équipement maître secondaire, la machine d'état de l'équipement maître primaire propose l'état actif, et pour l'équipement maître secondaire ayant détecté sur son entrée secondaire l'équipement maître primaire, la machine d'état de l'équipement maître secondaire propose l'état de veille avec surveillance active.

Avantageusement, un système d'arbitrage est disposé dans chaque équipement maître pour décider de manière autonome du mode de fonctionnement respectif de chaque équipement maître en fonction des recommandations de mode de fonctionnement faites par chaque machine d'état.

Avantageusement, ledit système d'arbitrage est apte à commander un redémarrage de la machine d'état.

Avantageusement, le câble terminal met en oeuvre une boucle de courant permettant de désigner l'un des équipements maîtres comme équipement maître primaire, c'est-à-dire actif par défaut.

### Brève description des figures

D'autres caractéristiques et avantages vont apparaître dans la description détaillée qui suit faite en regard des dessins annexés qui représentent :
- la figure 1 : le schéma de deux équipements maîtres reliés à un même bus de terrain dans une architecture permettant la mise en oeuvre du procédé selon l'invention ;
- la figure 2 : le schéma d'un exemple de lien spécifique, appelé câble terminal, entre les deux équipements maîtres redondants, permettant la mise en oeuvre du procédé selon l'invention ;
- la figure 3 : la représentation d'un exemple de machine d'état pouvant être mise en oeuvre au niveau de chacun des deux équipements maîtres redondants, conformément au procédé selon l'invention ;
- la figure 4 : le schéma d'un mode de réalisation électronique du lien spécifique présenté à la figure 2.

### Description détaillée d'au moins un mode de réalisation

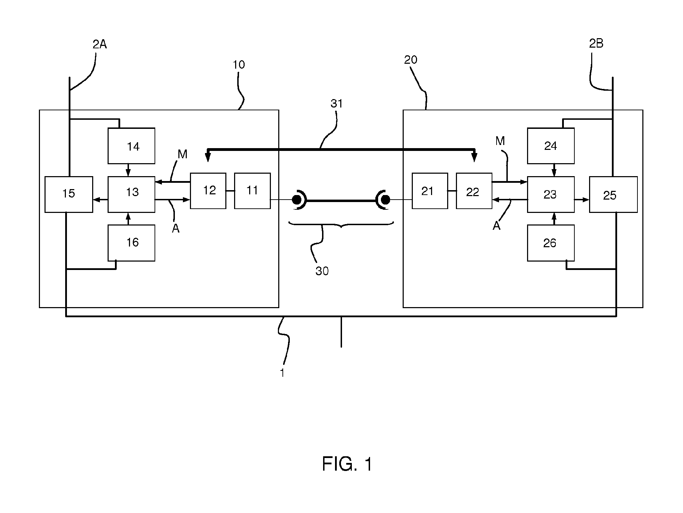

En référence à la figure 1, la présente invention vise la gestion de deux équipements maîtres 10, 20 connectés à un bus de terrain 1. Le but de l'invention est de permettre une négociation directe entre les équipements maîtres 10, 20 de telle manière que, de manière autonome, et grâce au câble terminal 30 qui relie lesdits équipements maîtres 10, 20, le système soit en mesure de déterminer lequel est primaire, c'est-à-dire actif par défaut, et lequel est secondaire, lequel doit être actif et lequel doit être en stand by.

Les équipements maîtres 10, 20 sont reliés entre eux par le câble terminal 30. Via leurs interfaces respectives 11, 21, les machines d'état 12, 22 sont aptes à communiquer et à mettre en oeuvre un système "d'électeur" 31 concurrentiel. Les machines d'état 12, 22 sont identiques et sont en mesure de déterminer quel sera l'équipement maître actif et quel sera l'équipement maître en stand by. Pour ce faire, les machines d'état 12, 22 se fondent sur un ensemble de signaux échangés entre les équipements maîtres 10, 20 par l'intermédiaire du câble terminal 30. Ce câble terminal 30, par un câblage adapté, permet par ailleurs de déterminer quel est l'équipement maître primaire, actif par défaut, et quel est l'équipement maître secondaire.

Chaque équipement maître 10, 20 est relié, par l'intermédiaire d'un bus de connexion 2A, 2B à un hôte doté d'un processeur. Cet hôte peut être unique pour les deux équipements maîtres 10, 20 ; alternativement, chaque équipement maître 10, 20 peut être relié à un hôte distinct.

Les équipements maîtres 10, 20 sont, comme vu précédemment, également reliés à un bus de terrain 1 sur lequel est connectée une grappe d'équipements à gérer. Entre ces bus de connexion 2A, 2B et le bus de terrain 1, les équipements maîtres 10, 20 comprennent respectivement une passerelle 15, 25.

Dans le mode de réalisation préféré de l'invention, un dispositif d'arbitrage 13, 23 est également mis en oeuvre. En fonction de l'accessibilité ou de la détection de défaut sur le bus de connexion à l'hôte 2A, 2B, respectivement par l'intermédiaire des moyens 14, 24, ou en fonction de l'accessibilité ou de la détection de défaut sur le bus de terrain 1, respectivement par l'intermédiaire de moyens 16, 26, le dispositif d'arbitrage 13 arbitre entre des modes de fonctionnement M proposés par les machines d'état 12, 22 pour chacun des équipements maîtres et peut ordonner l'abandon A du mode de fonctionnement actif courant d'un équipement maître en cas de problème : défaut d'accessibilité, défaut de fonctionnement de l'hôte, du bus de connexion 2A, 2B, de la passerelle 15, 25, du bus de terrain 1...etc.

A titre d'illustration, le système d'arbitrage 13 de l'équipement maître 10, considéré dans le cas présent comme l'équipement maître primaire, peut être amené à arbitrer et à prendre les décisions suivantes, en fonction de la situation :
- Si l'équipement maître 10 est primaire actif et que :
   ○ La négociation entre les machines d'état 12, 22 aboutit à proposer l'état actif pour l'équipement maître primaire 10 ;
   ○ Le bus de connexion 2A avec l'hôte est fonctionnel ;
   ○ Le bus de terrain 1 est fonctionnel ;
      => Alors, l'équipement maître 10 reste actif. Optionnellement, l'ordre d'abandon est conditionné à un ordre provenant de l'hôte ou du bus de terrain 1.
- Si l'équipement maître 10 est primaire actif et que :
   ○ La négociation entre les machines d'état 12, 22 aboutit à proposer l'état actif pour l'équipement maître primaire 10 ;
   ○ Le bus de connexion 2A avec l'hôte est fonctionnel ;
   ○ Le bus de terrain 1 est en défaut ;
      => Alors, l'équipement maître 10 reste actif. Optionnellement, l'ordre d'abandon est conditionné à un ordre provenant de l'hôte.
- Si l'équipement maître 10 est primaire actif et que :
   ○ La négociation entre les machines d'état 12, 22 aboutit à proposer l'état actif pour l'équipement maître primaire 10 ;
   ○ Le bus de connexion 2A avec l'hôte est en défaut ;
   ○ Le bus de terrain 1 est fonctionnel ;
      => Alors, l'équipement maître 10 reste actif. Optionnellement, l'ordre d'abandon est conditionné à un ordre provenant du bus de terrain 1.
- Si l'équipement maître 10 est primaire actif et que :
   ○ La négociation entre les machines d'état 12, 22 aboutit à proposer l'état actif pour l'équipement maître primaire 10 ;
   ○ Le bus de connexion 2A avec l'hôte est en défaut ;
   ○ Le bus de terrain 1 est en défaut ;
      => Alors, l'équipement maître 10 reste actif. Optionnellement, l'ordre d'abandon est automatiquement donné.
- Si l'équipement maître 10 est primaire actif et que :
   ○ La négociation entre les machines d'état 12, 22 préconise l'état stand by pour l'équipement maître primaire 10 ;
   ○ L'état du bus de connexion 2A est inconnu ;
   ○ L'état du bus de terrain 1 est inconnu ;
      => Alors, l'équipement maître 10 passe en stand by.
- Si l'équipement maître 10 est primaire et en stand by, et que :
   ○ La négociation entre les machines d'état 12, 22 préconise l'état stand by pour l'équipement maître primaire 10 ;
   ○ L'état du bus de connexion 2A est inconnu ;
   ○ L'état du bus de terrain 1 est inconnu ;
      => Alors, l'équipement maître 10 reste en stand by.
- Si l'équipement maître 10 est primaire et en stand by, et que :
   ○ La négociation entre les machines d'état 12, 22 aboutit à proposer l'état actif pour l'équipement maître primaire 10 ;
   ○ Le bus de connexion 2A est fonctionnel ;
   ○ Le bus de terrain 1 est fonctionnel ;
      => Alors, l'équipement maître 10 reste en stand by et est apte à devenir actif sur requête de l'hôte ou du bus de terrain 1. Optionnellement, aucun ordre d'abandon n'est donné.
- Si l'équipement maître 10 est primaire et en stand by, et que :
   ○ La négociation entre les machines d'état 12, 22 aboutit à proposer l'état actif pour l'équipement maître primaire 10 ;
   ○ Le bus de connexion 2A est en défaut ;
   ○ Le bus de terrain 1 est fonctionnel ;
      => Alors, l'équipement maître 10 reste en stand by. Optionnellement, un ordre d'abandon est donné.
- Si l'équipement maître 10 est primaire et en stand by, et que :
   ○ La négociation entre les machines d'état 12, 22 aboutit à proposer l'état actif pour l'équipement maître primaire 10 ;
   ○ Le bus de connexion 2A est fonctionnel ;
   o Le bus de terrain 1 est en défaut ;
      => Alors, l'équipement maître 10 reste en stand by. Optionnellement, un ordre d'abandon est donné.

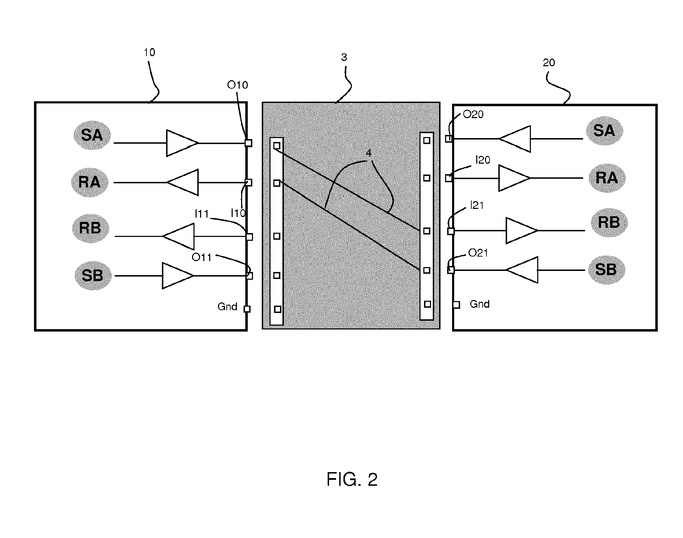

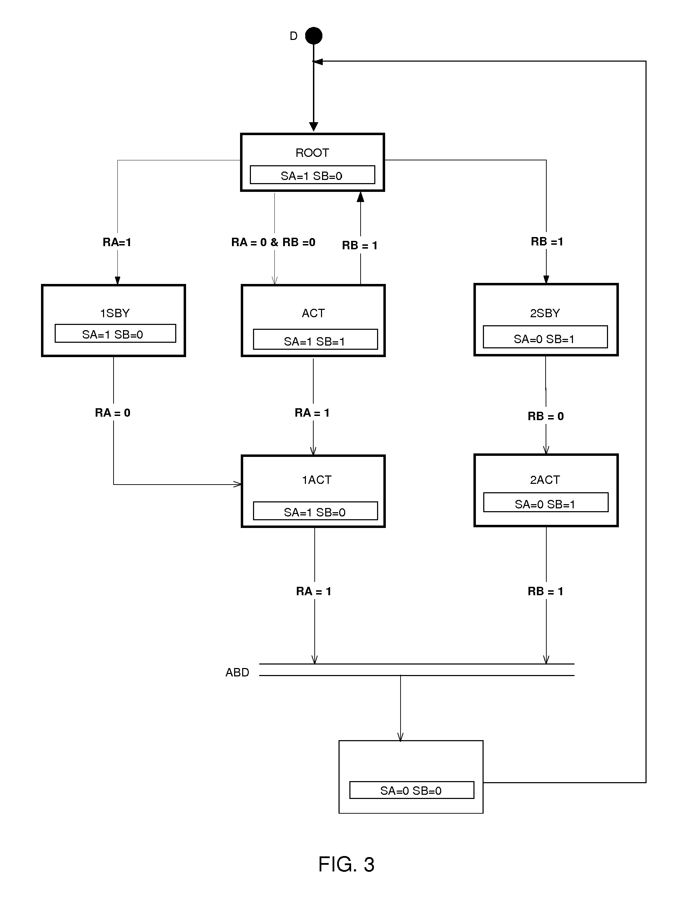

Les figures 2 et 3 illustrent respectivement un exemple de câble terminal 30 pouvant relier deux équipement maîtres 10, 20 et un exemple de machine d'état apte à déterminer le mode de fonctionnement - en particulier, actif ou stand by - de chacun desdits équipements maîtres 10, 20.

Dans le mode de réalisation présenté à la figure 2, les équipements maîtres 10, 20 sont connectés sur une même carte mère de fond de panier 3. Il est ici rappelé que cela n'est pas une condition nécessaire et que les équipements maîtres 10, 20 peuvent être branchés sur des cartes mères distinctes. Chaque équipement maître 10, 20 comprend une sortie primaire O10, O20 et une entrée primaire I10, I20, et une sortie secondaire O11, O21 et une entrée secondaire I11, I21 acheminant respectivement des signaux SA, RA, SB, RB. Par le câblage 4 reliant la sortie primaire O10 de l'équipement maître 10 à l'entrée secondaire I21 de l'équipement maître 20 et la sortie secondaire O21 de l'équipement maître 20 à l'entrée primaire I10 de l'équipement maître 10, et par la mise en oeuvre des machines d'état 12, 22 telles que décrites à la figure 3, on définit l'équipement maître 10 comme équipement maître primaire, c'est-à-dire actif par défaut, et l'équipement maître 20 comme équipement maître secondaire.

A titre d'illustration, et pour plus de clarté concernant les renvois aux figures précédentes, la machine d'état représentée à la figure 3 est considérée comme celle de l'équipement maître 10, mais celle de l'équipement maître 20 est identique. Il est considéré à la figure 3 que le câble terminal présenté à la figure 2 est mis en oeuvre. Selon ce mode de réalisation, au démarrage D, chaque équipement maître émet, dans une première étape ROOT, un signal SA valant 1 sur sa sortie primaire O10, sa sortie secondaire O11, associée au signal SB, restant à 0. Après l'étape ROOT, si un signal RA valant 1 est reçu sur l'entrée primaire I10, cela signifie que l'équipement maître 20 a émis sur sa sortie secondaire O21 un signal SB valant 1, que ledit équipement maître 20 est l'équipement maître secondaire, et qu'il est actif ; l'équipement maître 10 est alors primaire et en stand by 1SBY jusqu'à ce que l'entrée primaire I10 détecte que RA est passé à 0 : alors l'équipement maître primaire 10 devient actif 1 ACT.

Après l'étape ROOT, si les signaux RA et RB sont à 0, cela signifie que l'équipement maître 20 n'émet sur aucune de ses sorties et que l'équipement maître 10 est donc nécessairement actif ACT. De là, si RB passe à 1, la machine d'état revient à l'étape ROOT, et si RA vaut 1, l'équipement maître 10 reste actif et est l'équipement maître primaire 1 ACT.

Après la première étape ROOT, si RB vaut 1, cela signifie que l'équipement maître 20 a émis un signal SA valant 1 que l'équipement maître 20 est l'équipement maître primaire, et qu'il est actif. L'équipement maître 10 est donc secondaire et en stand by 2SBY. Si RB passe à 0, l'équipement maître 10 doit passer à l'état actif 2ACT.

Si, alors qu'il est primaire et actif 1ACT, l'équipement primaire 10 détecte sur son entrée primaire I10 un signal RA valant 1 ou, réciproquement, s'il est secondaire et actif 2ACT et qu'il détecte sur son entrée secondaire I11 un signal RB valant 1, la machine d'état de l'équipement maître 10 peut ordonner un abandon ABD permettant un redémarrage de ladite machine d'état.

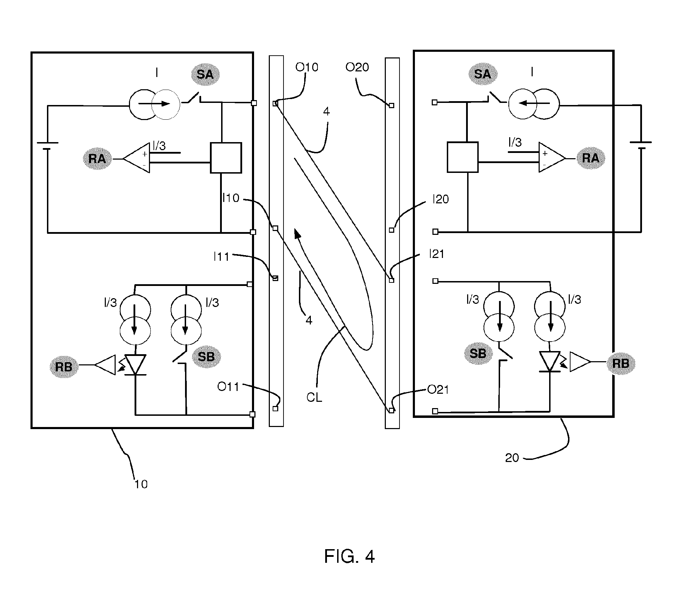

La figure 4 représente un moyen de mise en oeuvre électronique du câble terminal entre les équipements maîtres redondants 10, 20, le principe dudit câble terminal étant décrit à la figure 2, à l'aide d'une boucle de courant CL.

Les sorties primaires O10, O20 sont configurées pour émettre un signal électrique d'une intensité I choisie. Vu le câblage 4 représenté à la figure 4, l'équipement maître 10 est primaire et l'équipement maître 20 est secondaire. En positionnant sa sortie SA à 1, l'équipement maître 10 émet donc sur sa sortie primaire O10 un courant valant I. En mesurant l'intensité du courant dans la boucle CL, il est possible de déterminer la valeur de RA : si un équipement maître 20 est bien connecté, I/3, par exemple, est dérivé en tant que signal RB signifiant la détection, par l'équipement maître 20, de la présence et de l'activité de l'équipement maître 10 ; alors RB vaut 1. Encore I/3, toujours à titre d'exemple, est dérivé si l'équipement maître 20 est actif ; alors SB est positionné à 1. La valeur du courant mesurée sur l'entrée primaire de l'équipement maître 10 est alors comparée à I/3. Si le courant mesuré sur l'entrée primaire de l'équipement maître 10 est inférieur à I/3, RA vaut 1 ; sinon RA vaut 0.

Partant des valeurs respectives de SA, SB, RA, RB, les machines d'état des équipements maîtres 10, 20 peuvent être mises en oeuvre, conformément à la figure 3.

En résumé, la présente invention présente une méthode d'autodétermination du mode de fonctionnement - actif ou stand by - de chaque équipement maître parmi deux équipements maîtres redondants connectés à un même bus de terrain. Ce résultat est obtenu essentiellement à travers la mise en oeuvre d'un câble terminal spécifique comprenant un lien à deux fils et de machines d'états assumant la fonction d'électeur selon un principe autonome de négociation.

Selon l'invention, un système d'arbitrage peut être prévu pour trancher si besoin le mode de fonctionnement respectif de chaque équipement maître, notamment en cas de défaut de la liaison avec le bus de terrain ou avec le bus de connexion à l'hôte.

## Revendications

1. Procédé d'élection d'un équipement maître actif parmi deux équipements maîtres primaire et secondaire redondants (10, 20), lesdits équipements maîtres primaire et secondaire (10, 20) étant directement connectés à un bus de terrain (1) et reliés entre eux par un câble terminal (30), et présentant chacun un mode de fonctionnement actif et un mode de veille avec surveillance active,et présentant par ailleurs une même interface (11, 21),
**caractérisé en ce que** chacun desdits équipements maîtres primaire et secondaire (10, 20) présente en outre une même machine d'état (12, 22) comprenant des moyens pour désigner l'un desdits équipements maîtres primaire et secondaire (10, 20) comme équipement maître actif, et l'autre équipement maître (10, 20) comme équipement maître en veille avec surveillance active,
**en ce que** le câble terminal (30) comprend des moyens intrinsèques pour établir une relation directionnelle de l'équipement maître primaire (10, 20) à l'équipement maître secondaire (10, 20),
**en ce que** l'équipement maître primaire et l'équipement maître secondaire (10, 20) comprennent chacun une entrée primaire (I10, I20), une sortie primaire (O10, O20), une entrée secondaire (I11, I21) et une sortie secondaire (O11, O21) et **en ce qu'**un câble terminal (30) relie la sortie primaire (O10) de l'équipement maître primaire (10) à l'entrée secondaire (I21) de l'équipement maître secondaire (20) et la sortie secondaire (O21) de l'équipement maître secondaire (20) à l'entrée primaire (I10) de l'équipement maître primaire (10),
**en ce que**, lorsqu'ils démarrent, les deux équipements maîtres primaire et secondaire (10, 20) signalent, de façon identique, qu'ils sont aptes à fonctionner sur l'interface (11, 21) en émettant un signal nominal sur leurs sorties primaire (O10, O20) et secondaire (O11, O21), la relation directionnelle établie par le câble terminal (30) étant configurée de telle manière que l'équipement maître secondaire (10, 20) détecte la présence de l'équipement maître primaire (10, 20), s'il est apte à fonctionner, sur son entrée secondaire (I11, I21), et l'équipement maître primaire (10, 20) détecte l'équipement maître secondaire (10, 20), s'il est apte à fonctionner, sur son entrée primaire (I10, I20) ;
et **en ce que**, pour l'équipement maître primaire (10, 20) ayant détecté sur son entrée primaire (I10, I20) l'équipement maître secondaire (10, 20), la machine d'état (12, 22) de l'équipement maître primaire (10, 20) propose l'état actif, et pour l'équipement maître secondaire (10, 20) ayant détecté sur son entrée secondaire (I11, I21) l'équipement maître primaire (10, 20), la machine d'état (12, 22) de l'équipement maître secondaire (10, 20) propose l'état de veille avec surveillance active.

2. Procédé selon la revendication 1, **caractérisé en ce qu'**un système d'arbitrage est disposé dans chaque équipement maître (10, 20) pour décider de manière autonome du mode de fonctionnement respectif de chaque équipement maître (10, 20) en fonction des désignations de mode de fonctionnement faites par chaque machine d'état (12, 22).

3. Procédé selon la revendication 2, **caractérisé en ce que** ledit système d'arbitrage est apte à commander un redémarrage de la machine d'état (12, 22).

4. Procédé selon l'une quelconque des revendications précédentes, **caractérisé en ce que** le câble terminal (30) met en oeuvre une boucle de courant permettant de désigner l'un des équipements maîtres (10, 20) comme équipement maître primaire actif par défaut.
